# EUROPEAN PATENT APPLICATION

(11) **EP 1 154 363 A2**
(43) Date of publication of application: **14.11.2001**
(21) Application number: 01300444.5
(22) Date of filing: 18.01.2001
(51) Int. Cl.: G06F 17/60

(54) **Address managing system**

(30) Priority: 09.05.2000 KR 2000024602
(71) Applicant: Kim, Sung Duk, Kangnam-Ku, Seoul (KR); Han, Ho Hyeorn, Seoul (KR)
(72) Inventor: Kim, Sung Duk, Kangnam-Ku, Seoul (KR); Han, Ho Hyeorn, Seoul (KR)
(74) Representative: Roberts, Gwilym Vaughan

(57) **Abstract**

An address managing system, in which the recipient registers his/her own address in the database (48) of the system through a network, and is assigned a particular address code for inspecting and utilizing the addresses through network by utilizing the code. The system includes an address registration section (41) for assigning the address code to a recipient, an address change section (47) allowing the recipient to register a change in his/her address, an address providing section (44) for providing a mailer with the address of a counterpart recipient in response to the input of the recipient's address code, and a database (48) for storing the information including the recipient's address and address code.

## Description

The invention relates to a system enabling a recipient to manage and utilize addresses through a network, and more particularly to a system enabling a recipient to inspect and utilize addresses by the recipient based on a particular code assigned to the recipient after registration of his/her own address through a network in the database within the system.

In general, a recipient notifies his/her own address to a mailer by means of a business card or an envelope, on which the address is printed in a particular format as required by the mailer. The mailer then utilizes the same address by means of handwriting or printing out the address through computer and other printing equipment.

In line with this conventional method of notifying and utilizing the addresses, input of recipients' addresses through the internet for delivery of ordered products is increasing due to the continuous expansion of electronic commerce. Accordingly, the cost of inputting the changed address by recipients and managing the inputted addresses by mailers is also on the rise, thereby posing a burden both on the recipients and mailers in notifying and utilizing the addresses.

According to a UAA(undeliverable-as-addresses) study conducted by Price Water House Coopers published on Mailers Companion in. the January 2000 edition, 5.4 billion pieces (mails) are not properly delivered or returned due to an incorrect address, etc.

However, the conventional method described above poses a problem of requiring much time and effort for notifying the mailers of the recipients' changed addresses by means of mail, telephone or facsimile.

On the other hand, failure to notify a recipients' changed addresses to the mailers also poses a problem of mis-delivery of the correspondence, bills or parcels.

To resolve these problems, an object of the invention is to provide an address managing system, in which the recipients can input their changed addresses in an economic and timely manner, while the mailers can utilize the most updated addresses of the recipients in the address managing system in a convenient manner.

Another object of the invention is to provide an address managing system which enables mailers to obtain the most up-to-date addresses of the recipients in a real time manner.

To achieve the above objects, there is provided an address managing system for managing addresses through a network, comprising an address registration section for assigning a particular address code to a recipient's address, if the recipient registers his/her own address; an address change section allowing the recipient to register a changed address; an address providing section providing a mailer with the recipient's address by utilizing the recipient's registered address code; and a database for storing information including the address, address code, etc. of the recipient.

The system of notifying and utilizing the addresses according to the invention simplifies the address notification process by codifying and registering each address with a specific address code. In particular, the system according to the invention allows the recipients to save time and cost for notifying each mailer of any changed addresses by enabling each mailer to gain access to the updated address information through only a single registration of their changed addresses.

The system according to the invention also creates economic profits for the mailers by preventing mis-delivery of mails, parcels or notices in case of the recipients' address changes as well as by saving costs to be incurred for managing the records of any changed addresses.

An embodiment of the invention will now be described, by way of example, with reference to the drawings, of which:
FIG. 1 is a view illustrating the construction of the entire system according to the invention.
FIG. 2 is a block diagram illustrating the process of utilizing the system by a recipient according to the invention.
FIG. 3 is a block diagram illustrating the process of utilizing the system by a mailer according to the invention.

A preferred embodiment of the present invention will be explained in detail with reference to the accompanying drawings.

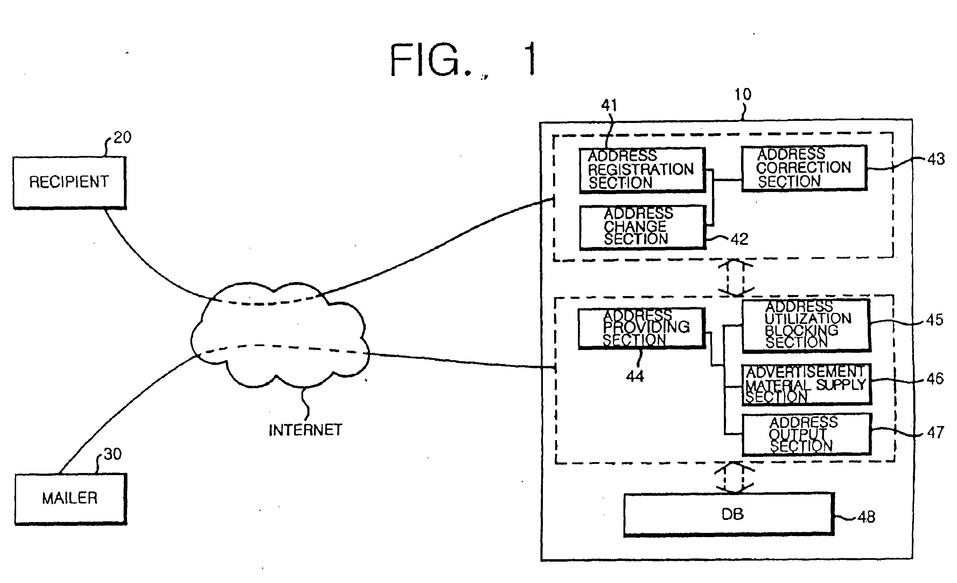

FIG. 1 shows the address managing system according to the invention. Referring to FIG. 1, the address managing system 10 comprises an address registration section 41 allowing a recipient 20 to register his/her own address, an address change section 42 allowing the recipient to register his/her changed address, an address correction section 43 allowing the recipient to correct erroneous change of his/her address, an address providing section 44 providing a mailer with the recipient's address, and a database 48 for storing the information such as the address, address code, etc. of the recipient. The system also comprises a controller (not shown) for controlling the processes of the recipient and mailer on a web site.

The recipient connects to the address managing system 10 through the open network, i.e., internet, and registers his/her own address in a consigned manner for receipt of correspondence, parcels, bills, etc., including the name of the state, address, postal code, etc. A. P.O. box address may be registered if necessary. (The recipient's telephone number or electronic mail address may be additionally registered if desired.) Such registrations are performed by the address registration section 41. If the recipient is a new member, the address registration section 41 assigns a particular address code and a password to the recipient.

If the recipient registers his/her own address in the system according to the invention, the system supplies only the address to the mailer 30 or other users without providing the name or any other information concerning the recipient so as to avoid a jeopardy of exposing any personal information.

The recipient can also register multiple addresses including his/her own workplace or home. If the recipient registers his/her own address, an address code and a password are assigned to the recipient by the address registration section. The address code consists of numbers or characters, preferably of numbers only, of about 9 digits.

According to the invention, the recipient can notify the mailer of his/her own address code, either alone or in line with the existing address, in a required format. In case of registering or changing the address through network such as internet, or in electronic commerce, the recipient can minimize the address input process by inputting the relevant address code.

If the registered address is changed on the ground of moving, etc., the recipient can replace the registered address with a new address through the address change section 42 of the system.

The mailer can obtain the information on the recipient's address from the address managing system by utilizing the interested address code, and print out the address to be used for sending correspondence, parcels, bills, etc. Also, the mailer can print the addresses on labels or envelopes by using the KIOSK (trademark).

Specifically, the mailer connects to the address managing system 10 through the internet, and logs into the address providing section 44 of the system. When the mailer inputs the address code of the recipient on the web site, the address providing section 44 provide the information on the recipient's address corresponding to the address code stored in the database 48, through various methods such that the mailer can obtain the necessary information from the system of the invention.

Preferably, the system comprises an address utilization blocking section 45 for preventing mailers from utilizing the information of the recipient's address at all or for a certain period of time, or for blocking a particular mailer from utilizing the recipient's address. Specifically, the recipient who wants to block the utilization of the registered address logs into the address utilization blocking section 45, and then can input the information on the utilization blocking or alter the previously inputted information on the utilization blocking or alter the previously inputted information on the utilization blocking..

Preferably, the information on the utilization blocking comprises the name of a particular mailer and an absence period, and is stored in the database 48. When the mailer connects to the system of the invention and requests the information of the interested recipient's address, the controller determines whether the mailer is related to the blocked mailer or whether the mailer connects to the system within the blocked period. Therefore, since the recipient controls the utilization of the registered address, the information on the registered address can not be used by a particular mailer or within the absence period. In addition, only a particular mailer can use the information of the registered address, thereby preventing the information from being disclosed to another mailer.

As illustrated in FIG. 1, the system according to the invention may include an advertisement material supply section 46 for registering the kinds of advertisement materials desired by the recipient and supplying the recipient's address to the mailer who supplies the relevant advertisement materials, and an address output section 47 for printing and supplying the recipient's address in response to the mailer's request.

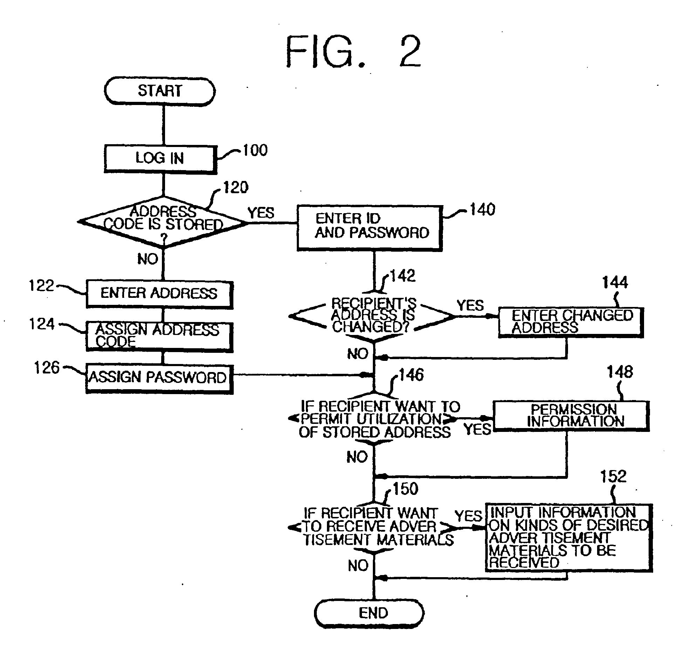

Reference to FIG. 2, it will be explained in detail the process in which the recipient connects to the system according to the invention through the network.

The recipient first logs into the system (step 100), and inputs his/her address code. If the address code is not stored in the database (step 120), the recipient inputs the address of his/her own residence or company (step 122). Then, the system assigns a particular address code and a password to the recipient (steps 124 and 126).

If the address code is stored at the step 120, the recipient enters a log-in ID and a password in the system (step 140). If his/her most recent address is different from the registered address (step 142), i.e., if the address has been changed, the recipient inputs the changed address (step 144). The recipient's address may be always displayed on a monitor of the recipient to show the registered address after the step 120.

After the steps 126 and 144, if the recipient wants to prevent the mailer from using the registered address (step 146) or wants to receive the desired advertisement materials (step 150), the recipient may input the utilization blocking information and information on kinds of desired advertisement materials to be received into the system (steps 148 and 152).

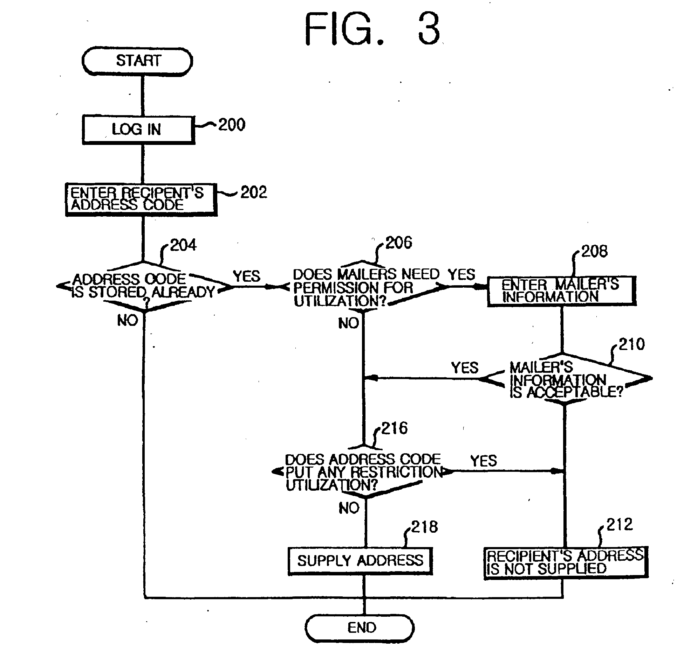

Referring to FIG. 3, it will be explained in detail the process in which the mailer connects to the system according to the invention through the network.

The mailer logs into the system (step 200), and inputs the recipient's address code to be inquired (step 202). If the inquired address code is stored in the database (step 204), the controller of the system determines whether or not the inputted address code requests the mailer's information (step 206).

If the inputted address code is not stored in the database of the system at the step 204, the controller of the system either stops the operation of the system or requests another address code to be inputted.

If at step 206 it is determined that the mailer can utilize the address of the inputted address code, the controller of the system determines whether or not the inputted address code is subject to the utilization blocking (step 216).

If the inputted address code is determined to be subject to the utilization blocking, the mailer inputs the information, for example, name, of the mailer (step 208). The controller then determines whether or not the mailer's information is entitled to access (step 210). If negative, the recipient's address information is not supplied to the counterpart mailer (step 212). If affirmative, step 216 proceeds.

If the recipient has designated the utilization blocking function such as the absence period of recipient at the step 216, the controller does not supply the mailer with the recipient's address information. Otherwise, the recipient's address is supplied (step 218).

## Claims

1. An address managing system for managing addresses through a network, comprising:
an address registration section for assigning an address code to a recipient on the registration of an address by a recipient;
an address change section allowing the recipient to change an address;
an address providing section providing a mailer with access to the address of the recipient in response to inquiry of the address code;
a database for storing information including the address and address code; and
a controller for controlling the system in response to input of the recipient and the mailer.

2. The address managing system as claimed in claim 1, further including an address utilization blocking section for precluding a mailer from access to the information.

3. The address managing system as claimed in claim 1, further including an advertisement material supply section for registering advertisement material desired by the recipient, and notifying a counterpart mailer to supply the advertisement material to the recipient at the address.

4. The address managing system as claimed in claim 1, further including an address print section for outputting the recipient's address in response to the mailer's request.

5. A method for managing addresses through a network, comprising the steps of:
assigning an address code or codes to a recipient on the registration of an address;
allowing the recipient to register a change in an address;
providing a mailer with the address of the recipient in response to an inquiry with the address code;
storing information including the recipient's address and address code in a database; and
controlling the system in response to the input of the recipient and the mailer.

6. The method of claim 5, further including preventing a mailer from using information on the recipient's address or preventing the information from being used within a particular period.

7. The method of claim 5, further including registering advertisement material desired by the recipient, and notifying a counterpart mailer to supply the advertisement material.

8. The method of claim 5, further comprising outputting the recipient's address in response to the mailer's request.

9. An address management system for managing addresses through a network comprising:
a data controller;
a data store, in which the data controller includes address registration means for assigning an address code to a recipient on the registration of an address by a recipient, address change means allowing the recipient's to change an address and address providing means providing a mailer with access to the address of the recipient in response to enquiry of the address code, and the data store stores address management information including the address and address code.

10. A computer readable medium including instructions for implementing an address management system and/or method for managing addresses as claimed in any preceding claim.

11. A computer or distribution of computers programmed to carry out an address management system or method for managing addresses as claimed in any preceding claim.
